Europäisches Patentamt

European Patent Office

Office européen des brevets

(11) Publication number: **0 226 376**
**A2**

(12) # EUROPEAN PATENT APPLICATION

(21) Application number: 86309351.4

(51) Int. Cl.4: **B29B 13/02** , //B32B31/20

(22) Date of filing: 01.12.86

(30) Priority: 10.12.85 ZA 859442

(43) Date of publication of application:
24.06.87 Bulletin 87/26

(84) Designated Contracting States:
AT CH DÉ FR GB IT LI NL SE

(71) Applicant: **AECI LIMITED**
**16th Floor Office Tower Carlton Centre**
**Commissioner Street P.O. Box 1122**
**Johannesburg 2000 Transvaal(ZA)**

(72) Inventor: **Le Maitre, Richard Bruce Carlyle**
**14 Picardy Avenue**
**Somerset West Cape Province(ZA)**

(74) Representative: **Brunner, Michael John et al**
**GILL JENNINGS & EVERY 53-64 Chancery**
**Lane**
**London WC2A 1HN(GB)**

(54) **Handling of thermoplastic webs during heating thereof.**

(57) A laminator or embosser has heating means 16 for heating a thermoplastic web 12.2, 12.3 before it enters the laminator or embosser nip 18. While the web is being heated it is supported or guided by means of a cooled contacting surface formed by cooled tubes 30 or a support plate with cooled ridges 50.1, 50.2 over which the web slidably moves. The area of contact between the web and the contacting surface is substantially less than the area of the web being heated, and the contacting surface is maintained at a temperature below that at which the web will commence to stick to the surface.

FIG. 1

EP 0 226 376 A2

## Handling of thermoplastic webs during heating thereof

THIS INVENTION relates to a method of handling thermoplastic webs during heating thereof and to apparatus for use in such method.

In the processing of thermoplastic webs it is often necessary to heat the web. For example, in a laminator for producing a laminate from two or more thermoplastic webs, the webs are individually heated so as to render their surfaces tacky prior to the webs passing together through a laminator nip where they are pressed together. Another example is an embosser, where the web to be embossed is heated prior to passing through the embosser nip.

Handling of the web during heating presents a number of difficulties. The conventional method of heating a web prior to the web entering a lamination or embosser nip is to pass the web partly around a rotary heating drum. In this method the web is heated by heat transferred from the drum to the web through conduction. Thermoplastic webs tend to stick to hot surfaces, and they expand when heated. The combination of these two effects often causes the web to wrinkle and in places lift away from the drum surface. Those parts of the web which have lifted away from the drum surface receive less heat than those which remain in contact with the drum surface. This wrinkling, and the resulting uneven heating of the web, detrimentally affects the quality of the laminated or embossed end product.

The heating drum needs to be large to provide a sufficiently large area over which heat transfer to the web can take place. This makes it necessary that there be a certain minimum distance between the point where the web leaves the heating drum and the lamination or embosser nip. To prevent the web from cooling down unduly while travelling this distance, radiant heaters are provided to further heat the web between the heating drum and the lamination or embosser nip. Some cooling nevertheless takes place as, in the existing arrangements where there is no physical contact with the web between where it leaves the heating drum and where it enters the lamination or embosser nip, it has not been possible to position the heaters as close to the lamination or embosser nip as is desired. It is therefore necessary to heat the web to a temperature higher than that required for lamination or embossing to take place, with obvious disadvantages.

Furthermore, due to the web sticking to the heating drum, tension must be applied to the heated web to strip it off the heating drum. This tension strains the material of the web and some of this strain is "memorised" when the web is subsequently cooled. This detrimentally affects the stability of the end product, i.e. the ability of the product to retain its shape over long periods of time, particularly when heated again.

Another major disadvantage of existing laminators and embossers is that should overheating take place and the web melt or even catch fire, the molten or burning web material sticks to all parts of the apparatus which are hot and with which the material comes into contact, particularly the heating drum. It then takes several hours of down time to clean up the apparatus before it is ready for use again.

It is an object of the invention to overcome or at least alleviate the above disadvantages.

According to the invention there is provided a method of handling a thermoplastic web during heating thereof, which method comprises supporting or guiding the web by means of a cooled contacting surface which contacts the web, with the web moving slidably over the contacting surface, the area of contact between the web and the contacting surface being substantially less than the area of web being heated, and the contacting surface being maintained at a temperature which is below that at which the web will commence to stick to the surface.

The contacting surface may consist of a series of surface strips which are spaced apart in the direction of movement of the web and each extend in a direction which intersects the direction of movement of the web.

The surface strips may, on each opposite side of the web, extend at an angle of less than 90° to the direction of forward movement of the web.

Each surface strip may be formed by a tube having a coolant medium flowing therethrough.

Alternatively, the surface strips may be formed by the crests of a plurality of ridges on a cooled plate.

Further according to the invention there is provided apparatus for heating a moving thermoplastic web, the apparatus comprising:
heating means for heating the web;
support means for supporting or guiding the web while being heated by the heating means, the support means being arranged to support or guide the web by a contacting surface of the support means slidably contacting the web such that the area of the contacting surface is substantially less than the area of the web being heated; and
cooling means for cooling the contacting surface.

The contacting surface may consist of a series of surface strips which are spaced apart in the direction of movement of the web and each extend in a direction which intersects the direction of movement of the web.

The surface strips may, on each opposite side of the web, extend at an angle of less then 90° to the direction of movement of the web.

In one form of the invention the support means may comprise a series of tubes which are spaced apart in the direction of movement of the web, the cooling means comprising means for causing a coolant medium to flow through the tubes.

Each surface strip may be formed by the crest of an external ridge extending along a respective tube.

The ridge may be formed by a length of wire secured to the outside of the respective tube.

The tubes may be of polygonal cross-section, in which event each surface strip may be formed by one of the corners of a respective tube.

In another form of the invention the support means may comprise a plate, in which event each surface strip may be formed by the crest of a ridge protruding from a surface of the plate.

The invention will now be described in more detail, by way of example, with reference to the accompanying drawings.

In the drawings :

Figure 1 is a side view of a laminator having means for handling the webs being laminated in accordance with the invention;

Figure 2 is a detail of part of Figure 1;

Figure 3 is a cross-section through one of the cooled tubes forming part of the handling means;

Figure 4 is a cross-section through another one of the cooled tubes forming part of the handling means;

Figure 5 is a cross-section through an alternative form of cooled tube;

Figure 6 is a plan view of support means in accordance with another embodiment of the invention; and

Figure 7 is a cross-section of the support means, at VII-VII in Figure 6.

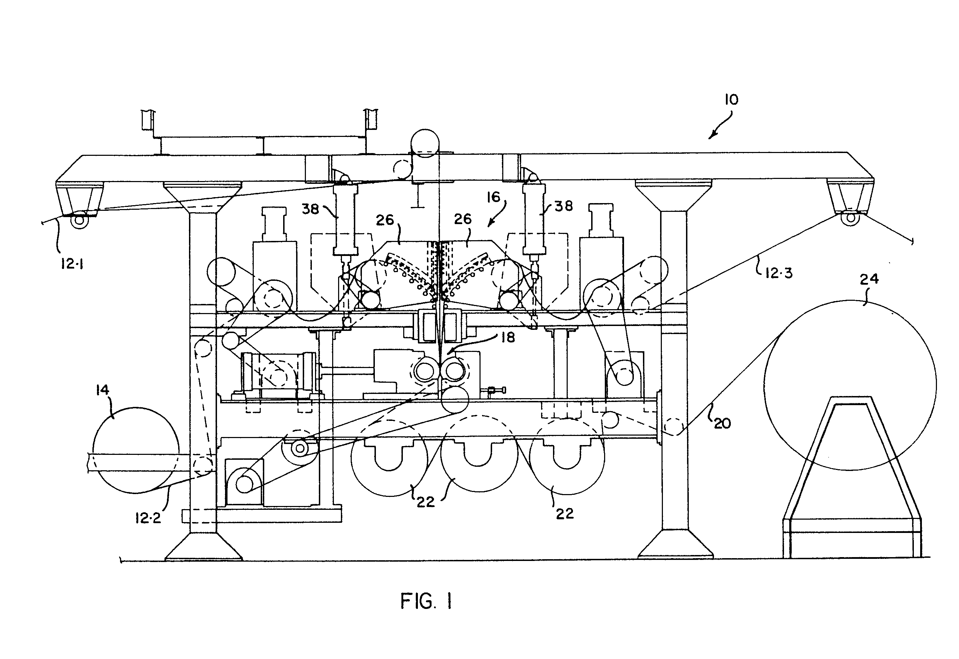

Referring first to Figure 1, reference numeral 10 generally indicates a laminator for producing a 3-ply PVC laminate. Three PVC webs 12.1, 12.2, and 12.3 are fed to the laminator from supply rolls, only one of which is shown at 14. The webs pass separately through a heater 16 where they are heated to the requisite temperature, and from there they are fed together into a laminator nip 18. A three-ply laminate 20 emerges from the laminator nip, passes around a series of cooling rollers 22, and is then wound up on an end product roll 24. The centre web 12.1 could, instead of being a PVC web, be a synthetic fibre scrim.

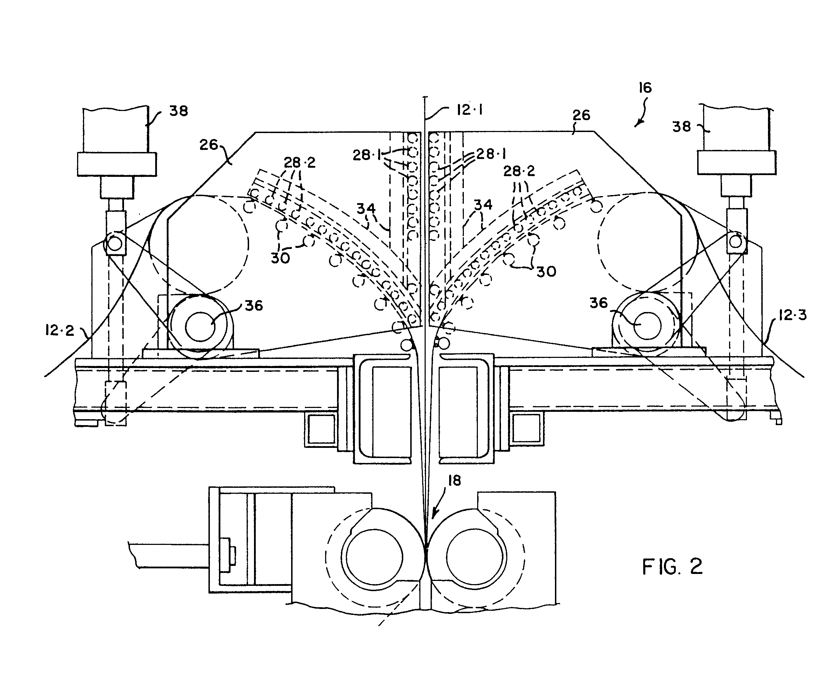

The heater 16 is illustrated in more detail in Figure 2. It comprises, on each opposite side of the laminator, a pair of cheek plates 26, and a number of electrical bar heaters mounted between the cheek plates so as to extend transversely from one cheek plate to the opposite cheek plate. There is a first series of bar heaters 28.1 for heating opposite sides of the centre web 12.1, and a second series of bar heaters 28.2 for heating the upper surface of each of the two outer webs 12.2 and 12.3.

The centre web 12.1 moves vertically downwards, and therefore needs no guidance or support while being heated. However, the outer webs 12.2, 12.3 cannot also move vertically downwardly while being heated and need some form of support and guidance. This is provided in accordance with the invention by a series of cooled, thin-walled, tubes 30. The tubes 30 extend across the width of the laminator and are spaced apart along the direction of movement of the respective webs 12.2, 12.3. The tubes 30 are mounted on the framework of the laminator by means of laterally spaced, vertically extending plates (not shown) having a gently curved upper edge.

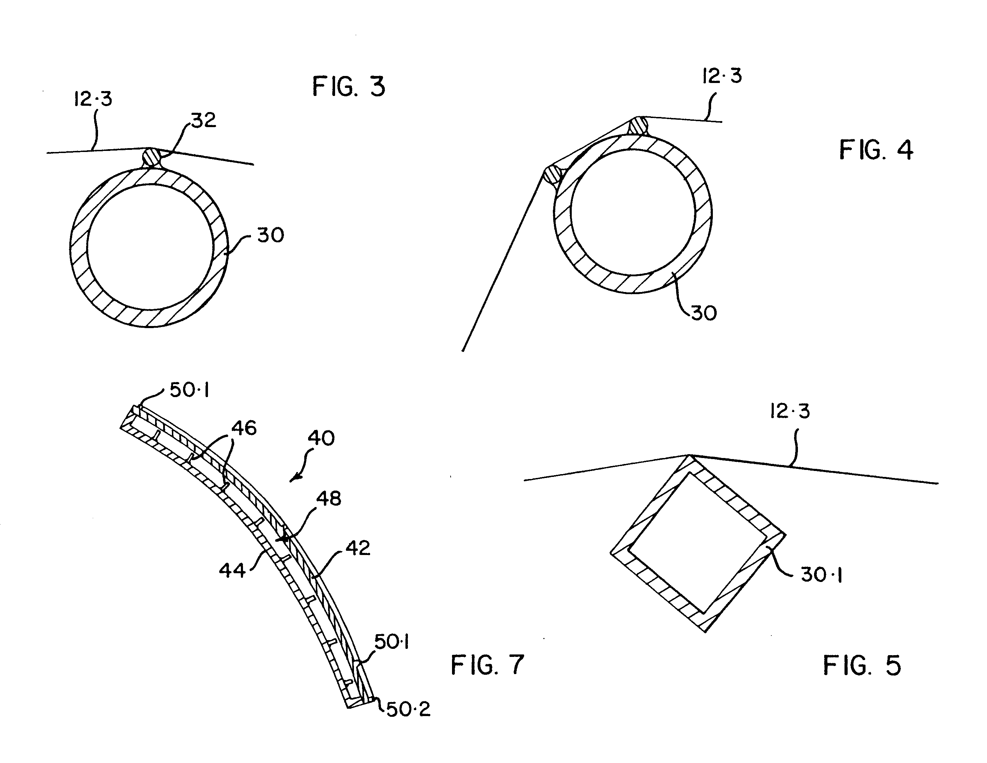

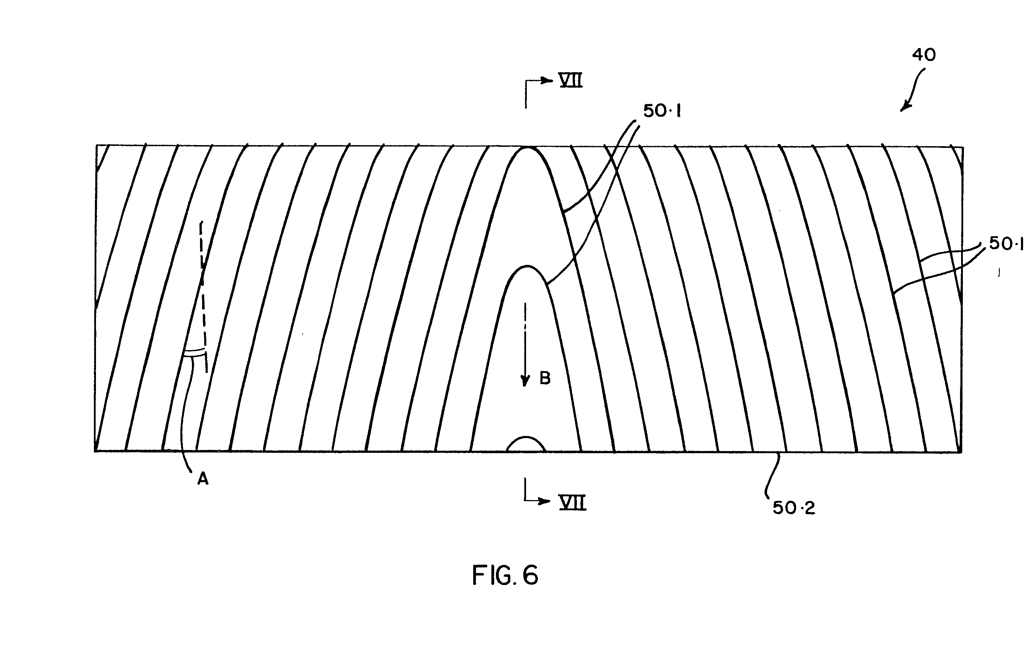

Each of the tubes 30, with the exception of the last tube in each series, has a cross-section as shown in Figure 3. The last tube in each series has a cross-section as shown in Figure 4.

As will be seen in Figure 3, the tube 30 shown there is round in cross section and has a length of small diameter wire 32 silver soldered thereon, the wire extending along the length of the tube. In a typical example, the tubes 30 will be thin-walled stainless steel tubes having an outside diameter of 20mm, with the wire 32 silver soldered thereto having a diameter of about 2mm. The spacing between adjacent tubes 30 (centre line to centre line) will be in the order of 50mm. The web 12.2, 12.3 is supported on the tubes 30 via the wires 32. In view of the small diameter of the wire 32, the area of contact between the web 12.2, 12.3 and the wire is relatively small.

Deflection of the web 12.2, 12.3 to be effected by the last tube 30 in each series is greater than that required by the preceding tubes, and for this reason the last tube in each series is, as illustrated in Figure 4, provided with two wires 32.

In use, the webs 12.2, 12.3 pass at great speed across the tubes 30. In so doing, radiant heat from the bar heaters 28.2 heat up the webs to the desired temperature for lamination to take place. In the case of webs of PVC material, the optimum temperature for lamination is in the order of 157 to 165°C. Cooling water is, however, circulated through the tubes 30 so as to maintain their outside surfaces at a temperature of about 80 to 90°C which is sufficiently low for the webs not to stick to them. As the wires 32 on which the webs rest have a relatively small diameter, the arc of contact between them and the web is relatively small -virtually line contact -so that relatively little heat is lost through conduction from the web to the cooling water.

To improve the efficiency of the heater bars 28.1, 28.2, heat reflectors 34 may be provided behind them. Furthermore, heat reflectors (not shown) may be provided behind the cooled tubes 30, so as to minimise the loss of heat radiated through the webs 12.2, 12.3.

In case of an emergency stop, the source of heat should rapidly be removed from the webs 12.1, 12.2, 12.3. To this end the cheek plates 26 are pivotal at 36, rams 38 being provided to pivot each assembly of cheek plates 26 and heater bars 28.1, 28.2 away from the webs. Heaters are available which cool down sufficiently rapidly after the electric power to them is switched off that it is not necessary to move them away from the webs in the event of an emergency stop. Should it, however, happen that the webs 12.1, 12.2, 12.3 melt or catch fire, the molten material of the webs will collect on the tubes 30. As the tubes are cooled, the material will not stick to them and can readily be removed by wiping. Any of the material which drops through the spaces between adjacent tubes 30 will fall on parts of the apparatus which are relatively cool and can likewise readily be removed by wiping.

Figure 5 shows an alternative form of cooling tube 30.1. In this form, the tube 30.1 is square in cross section and arranged such that the web 12.3 rests on one of the corners thereof. It will be appreciated that the corner will not be sharp but instead will be slightly rounded, having a small radius of curvature.

Referring now to Figures 6 and 7, there is shown support means 40 for use in the apparatus 10 instead of the tubes 30. The support means 40 comprises a front plate 42 and, spaced behind it, a backing plate 44. The backing plate is provided with a series of transversely extending baffle plates 46 which protrude into the space 48 between the two plates and form this space into a tortuous flow duct for coolant medium. The baffle plates 46 do not quite touch the front plate 42, so as to avoid distortion of the front plate.

The external surface of the front plate 42 is machined to form a series of ridges 50.1 and 50.2. The ridges 50.1 extend, on each opposite side of the plate 42, in a direction which is at an angle A less than 90° to the direction B of movement of the web 12.2, 12.3 over the plate. Towards the centre of the plate, the ridges 50.1 become parabolic in shape. The ridge 50.2 extends along the trailing edge of the plate, i.e. the edge nearest the laminator nip 18, from one side of the plate to the other.

When the support means 40 is used, the webs 12.2, 12.3 will be supported on the crests of the ridges 50.1, 50.2 which will be cooled by the coolant medium circulating through the space 48. The effect of the ridges 50.1 which extend at an acute angle A to the direction of movement B of the web, will be to maintain the web slightly in lateral tension, thereby avoiding wrinkling of the web.

## Claims

1. A method of handling a thermoplastic web - (12.2, 12.3) during heating thereof, characterised in that it comprises supporting or guiding the web by means of a cooled contacting surface (32, 30.1, 50.1, 50.2) which contacts the web, with the web moving slidably over the contacting surface, the area of contact between the web and the contacting surface being substantially less than the area of web being heated, and the contacting surface being maintained at a temperature which is below that at which the web will commence to stick to the surface.

2. A method as claimed in claim 1, characterised in that the contacting surface (32, 30.1, 50.1, 50.2) consists of a series of surface strips which are spaced apart in the direction of movement (B) of the web and each extend in a direction which intersects the direction of movement of the web.

3. A method as claimed in claim 2, characterised in that, on each opposite side of the web, the strips extend at an angle (A) of less than 90° to the direction of forward movement of the web.

4. A method as claimed in claim 2 or claim 3, characterised in that each surface strip is formed by a tube (30, 30.1) having a coolant medium flowing therethrough.

5. A method as claimed in claim 2 or claim 3, characterised in that the surface strips are formed by the crests of a plurality of ridges (50.1, 50.2) on a cooled plate (42).

6. Apparatus for heating a moving thermoplastic web (12.2, 12.3), the apparatus comprising heating means (16) for heating the web, and support means for supporting or guiding the web while being heated by the heating means, characterised in that the support means is arranged to support or guide the web by a contacting surface (32, 30.1, 50.1, 50.2) of the support means slidably contacting the web such that the area of the contacting surface is substantially smaller than the area of the web being heated, and in that cooling means (30, 30.1, 48) are provided for cooling the contacting surface.

7. Apparatus as claimed in claim 6, characterised in that said contacting surface consists of a series of surface strips (32, 30.1, 50.1, 50.2) which are spaced apart in the direction of movement (B) of the web and each extend in a direction which intersects the direction of movement of the web.

8. Apparatus as claimed in claim 7, characterised in that, on each opposite side of the web, the surface strips extend at an angle A of less than 90° to the direction of movement of the web.

9. Apparatus as claimed in claim 7 or claim 8, characterised in that the support means comprises a series of tubes (30, 30.1) which are spaced apart in the direction of movement of the web, and wherein the cooling means comprises means for causing a coolant medium to flow through the tubes.

10. Apparatus as claimed in claim 9, characterised in that each surface strip (32) is formed by the crest of an external ridge extending along a respective tube (30).

11. Apparatus as claimed in claim 10, characterised in that the ridge is formed by a length of wire (32) secured to the outside of the respective tube (30).

12. Apparatus as claimed in claim 9, characterised in that the tubes (30.1) are of polygonal cross-section, each surface strip being formed by one of the corners of a respective tube.

13. Apparatus as claimed in claim 7 or claim 8, wherein the support means comprises a plate (42), and wherein each surface strip is defined by the crest of a ridge (50.1, 50.2) protruding from a surface of the plate.

FIG. I

FIG. 2

FIG. 3

12·3

32

30

FIG. 4

12·3

30

50·1

46

40

48

44

42

50·1

FIG. 7

50·2

12·3

30·1

FIG. 5

0 226 376

FIG. 6

0 226 376